# EUROPEAN PATENT SPECIFICATION

(11) **EP 4 540 012 B1**
(45) Date of publication and mention of the grant of the patent: **11.11.2026**
(21) Application number: 23738873.1
(22) Date of filing: 14.06.2023
(51) Int. Cl.: B23K 9/10, B23K 9/16

(54) **HYBRID-POWERED POWER SOURCE FOR A WELDING OR PLASMA CUTTING SYSTEM WITH POWER ON SWITCH FUNCTION, AND CORRESPONDING METHOD**
HYBRIDBETRIEBENE STROMQUELLE FÜR EIN SCHWEISS- ODER PLASMASCHNEIDSYSTEM MIT POWER-ON-SWITCH-FUNKTION, UND ENTSPRECHENDES VERFAHREN
SOURCE D'ALIMENTATION À PUISSANCE HYBRIDE POUR SYSTÈME DE SOUDAGE OU DE DÉCOUPE AU PLASMA AVEC FONCTION DE COMMUTATION DE PUISSANCE, ET PROCÉDÉ CORRESPONDANT

(30) Priority: 14.06.2022 IN 202241033906
(43) Date of publication of application: 23.04.2025
(73) Proprietor: ESAB AB, 402 77 Gothenburg (SE)
(72) Inventor: LOWTHER, Mark, Warrington Cheshire WA3 2GU (GB); RENGAMUNI, Govarthanan, Chennai, Tamil Nadu State 600063 (IN); SHANMUGAM, Paramasivam, Chennai, 600078 (IN); SELVAKUMAR, Sankar, Chennai, 600072 (IN)
(74) Representative: Murgitroyd & Company
(86) International application number: PCT/IB2023/056160
(87) International publication number: WO 2023/242773

(56) References cited:
- WO-A1-2022/003553
- US-A1- 2014 263 245
- US-A1- 2018 123 370

## Description

The present invention relates to a hybrid-powered power source to generate welding power for a welding or plasma cutting operation using battery power from a battery and/or alternating current (AC) power and a method, see claims 1 and 13.

### BACKGROUND

AC powered welding and plasma cutting power sources (i.e., supplies) generate output welding power for a welding or plasma cutting operation by converting AC power to direct current (DC) power and then converting the DC power to output welding power suitable for the welding or cutting operation via a weld process regulator. Battery powered welding and plasma cutting power sources generate output weld power for a welding or cutting process by converting battery power provided by a battery to suitable DC power, and then converting the DC power to output welding power suitable for the welding or cutting process via a weld process regulator. A conventional welding and plasma cutting power source does not provide hybrid-powered capability by which a welding power source can generate output welding power using AC power, battery power, or both together.

US2014/263245A1 (describing the preamble of claims 1 and 13) shows a welding system which includes an engine configured to drive a generator to produce a first power output. The welding system also includes a battery configured to discharge energy to produce a second power output. In addition, the welding system includes an auxiliary charger coupled to the battery and the generator. The auxiliary charger is configured to maintain a float charge of the battery when the first and second power outputs are reduced from a base load.

WO2022/003553A1 discloses a power supply apparatus comprising a battery apparatus, the battery apparatus comprising a power input, a power converter having an input side and an output side, a battery assembly, a switching arrangement, and a power output connected to the output side of the power converter is disclosed. The switch arrangement is operable to connect the battery assembly to the input side or to the output side of the power converter. The switch arrangement is configured to switch the apparatus to one of a plurality of connection states. The plurality of connection states includes a connection state in which the battery assembly is connected to the input side of the power converter and another connection state in which the battery assembly is connected to the output side of the power converter.

### SUMMARY OF THE INVENTION

According to a first aspect of the present invention there is provided a hybrid-powered (HP) power source for a welding or plasma cutting system as recited in claim 1.

Preferred embodimnents of the first aspect of the present invention are defined in its dependent claims.

According to a second aspect of the present invention there is provided a method as recited in claim 13.

### BRIEF DESCRIPTION OF THE DRAWINGS

FIG. 1 is a block diagram of an example hybrid-powered (HP) power source (also referred to as an "HP power supply") that may be employed in a welding or plasma cutting system to convert AC and/or battery power to weld power for welding or plasma cutting when the HP power source is turned on by actuation of a user switch.
FIG. 2 is a block diagram that focuses on example ON/OFF control circuitry of the HP power source that is responsive to actuation of the user switch.
FIG. 3 is a circuit diagram for the ON/OFF control circuitry.
FIG. 4 is a flowchart of an example method performed primarily by the ON/OFF control circuitry of the HP power source responsive to one or more actuations of the user switch.
FIG. 5 is a block diagram of an example controller configured to perform operations described herein.

### DESCRIPTION OF EXAMPLE EMBODIMENTS

### Overview

An embodiment includes a hybrid-powered (HP) power source (HP power source) for a welding or plasma cutting system as defined in claim 1, comprising inter alia: power inputs including an AC input for AC power and a battery input for battery power; an HP power converter to convert one or more of the AC power and the battery power to a weld power for welding or plasma cutting when the HP power converter is turned ON; and ON/OFF control circuitry including a user switch and which is coupled to the power inputs and the HP power converter, wherein the ON/OFF control circuitry is configured to turn ON the HP power converter upon actuation of the user switch while the HP power converter is turned OFF, wherein the ON/OFF control circuitry is configured to connect to the HP power converter whichever of the AC power and the battery power is or are present upon the actuation.

### Example Embodiments

According to embodiments presented herein, a hybrid-powered (HP) power source generates weld power for a welding or plasma cutting operation from (i.e., based on) battery power provided by a battery, AC power from an external AC source, or both. The HP power source (also referred to as an "HP welding power source") may be employed in systems for metal inert gas (MIG)/metal active gas (MAG) (MIG/MAG) welding, tungsten inert gas (TIG) welding, flux cored arc welding (FCAW), shielded metal arc welding (SMAW) or stick welding, and submerged arc welding (SAW), for example. The HP power source may also be employed in systems that perform plasma cutting. Thus, the HP power system may be used to generate weld power for welding or plasma cutting.

The HP power source includes ON/OFF control circuitry configured to perform turn ON/OFF control functions or operations that automatically turn ON or OFF (i.e., "turn ON/OFF") the HP power source according to embodiments presented herein. When turned ON, the HP power source is energized by one or more of the AC power and the battery power to generate the weld power. When turned OFF, the HP power source is not energized by one or more of the AC power and the battery, and does not generate the weld power. The ON/OFF control circuitry includes a single user switch, coupled to associated circuitry of the ON/OFF control circuitry, by which an operator can safely turn ON/OFF the HP power source with a single actuation of the user switch. For example, when the HP power source is OFF, a single actuation (e.g., a mechanical actuation) of the single user switch causes the ON/OFF control circuitry to safely turn ON the HP power source automatically to operate with AC power when the AC power is present, battery power when the batter power is present, or operate with the AC power and the battery power when both are present concurrently. Conversely, when the HP power source is already ON, a subsequent single actuation of the single user switch causes the ON/OFF control circuitry to safely turn OFF the HP power source automatically.

The turn ON/OFF control circuitry has built in safety features. Specifically, the turn ON/OFF control circuitry provides physical/electrical isolation of possibly exposed AC input terminals of the HP power source while the HP power source operates off of battery power only. Similarly, the turn ON/OFF control circuitry provides physical/electrical isolation of possibly exposed battery output terminals (that usually feed battery power to the HP power source) while the HP power source operates off of AC power only. In addition, the turn ON/OFF control circuitry isolates the single user switch physically and electrically from high voltage portions of the HP power source. Further features and advantages of the embodiments presented herein are described below in connection with the figures.

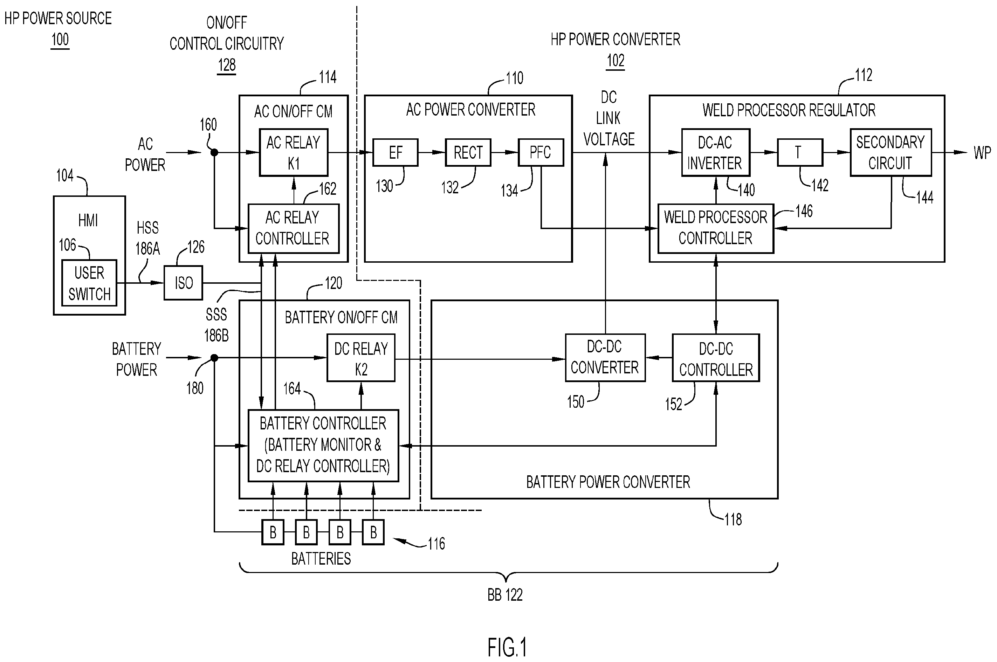

With reference to FIG. 1, there is a high-level functional block diagram of an example HP power source 100 that converts AC and/or battery power to weld power suitable for striking an arc for a welding or a plasma cutting operation when the HP power source is turned ON by actuation of a user switch. HP power source 100 includes an HP power converter 102 (also referred to as an "HP power converter assembly"), ON/OFF control circuitry 128, and batteries 116 (also referred to as "battery B") to provide battery power for welding. In some arrangements, batteries 116 may be external to HP power source 100. HP power converter 102 includes an AC power converter 110 (also referred to as an "AC power subsystem"), a battery power converter 118 (also referred to as a "battery power subsystem"), and a weld process regulator 112 following the AC power converter and the battery power converter. In some arrangements, the "AC power subsystem" may be considered to include both AC power converter 110 and weld process regulator 112, and the "battery power subsystem" may be considered to include both battery power converter 118 and weld processor regulator 112. ON/OFF control circuitry 128 includes a human machine interface (HMI) 104 that includes a user switch 106, a switch isolator 126, AC ON/OFF control module 114, and battery ON/OFF control module 120.

ON/OFF control circuitry 128 includes user switch 106 used by an operator to interface with and manually control HP power converter 102. HP power converter 102 may be powered by AC power, battery (DC) power, or both AC and battery power together. For example, HP power converter 102 may operate on only AC power in a first powered mode, only battery power in a second powered mode, or both AC and battery power in a third/hybrid powered mode. HP power converter 102 derives (output) weld power WP for a welding or cutting operation from AC power and/or battery power, or both together. An operator actuates user switch 106 (e.g., a single user switch configured to be actuated manually) to turn ON/OFF HP power converter 102. That is, user switch 106 is an ON/OFF switch for HP power converter 102. The actions of turning ON/OFF HP power converter 102 are considered equivalent to actions of turning ON/OFF HP power source 100. In other words, when HP power converter 102 is turned ON/OFF, HP power source 100 is considered to be turned ON/OFF, correspondingly.

HP power converter 102 includes AC power converter 110 to convert AC power when available to a constant, regulated DC link voltage, and weld process regulator 112 following the AC power converter to generate the weld power WP suitable for a welding process from the DC link voltage (thus the AC power converter facilitates generation of the weld power WP). AC ON/OFF control module (CM) 114 of ON/OFF control circuitry 128 selectively connects/disconnects AC power (supplied from an external AC power source) to/from the AC power converter and weld process regulator 112 responsive to actuation of user switch 106.

HP power converter 102 includes battery power converter 118 to convert/condition and control the battery power. Battery ON/OFF control module (CM) 120 of ON/OFF control circuitry 128 selectively connects/disconnects the battery power from batteries 116 to/from battery power converter 118 responsive to actuation of user switch 106. Batteries 116 and battery ON/OFF control module 120 collectively form a "battery box" (BB) 122.

ON/OFF control circuitry 128 includes switch isolator (iso) (e.g., an optocoupler switch) 126 through which user switch 106 interacts with each of AC ON/OFF control module 114 and battery ON/OFF control module 120. Switch isolator 126 electrically and physically isolates user switch 106 from AC power, battery power, and high voltages present in HP power converter 102.

AC power converter 110 includes an optional EMI filter (EF) 130, a rectifier 132, and a power factor correction (PFC) boost circuit 134. Assuming/when AC ON/OFF control module 114 supplies AC power to AC power converter 110, EMI filter 130 filters the AC power and provides the AC power as filtered to rectifier 132. Rectifier 132 may include an AC/DC diode rectifier (not shown in FIG. 1) that receives the AC power as filtered and generates a rectified voltage signal. The input voltage of the AC power may vary, for example, from 90 Volts (V) AC (VAC) to 270 VAC or higher and may be single-phase or three-phase power. The rectified voltage signal is unregulated in that its magnitude is dependent on the magnitude of the AC power. PFC boost circuit 134 boosts the rectified voltage signal supplied by rectifier 132 to a higher voltage, e.g., 390 V regardless of the AC input voltage. That is, the regulated DC link voltage generated by PFC boost circuit 134 is designed to be a fixed, constant voltage whose magnitude is independent of the AC input voltage.

Weld process regulator 112 includes a DC-DC inverter 140 (e.g., an H-bridge inverter), a high-frequency (HF) transformer (T) 142, and a secondary circuit 144, such as a secondary rectifier, which supplies the weld power WP at a weld output to downstream welding equipment (e.g., a wire feeder, a welding gun or torch, a plasma torch, etc.), under control of a weld process controller 146. Weld process regulator 112 controls DC-DC inverter 140, e.g., via pulse width modulation, to control the weld power WP during a welding process according to the requirements of the welding process.

By way of example, batteries 116 include 4 individual batteries. As used herein, the term "battery" means any type of charge storage device. In one example, batteries are power tool batteries conventionally used to deliver power to power tools. Batteries 116 may be housed in a caddy, box, rack, etc. and electrically coupled together, e.g., in series or in parallel, to provide battery power for HP power source 100. In an example, batteries 116 can deliver a specified DC voltage level, e.g., 80 V, and have a specified total battery capacity, e.g., 6 Ampere-Hour (AH) to 15 AH. In the example, output terminals of batteries 116 are connected in series, with each battery configured to discharge power at 20 VDC, resulting in a final/output battery power of 80 V (DC). The 80 V output battery power is supplied to battery ON/OFF control module 120, which selectively supplies or does not supply the output battery power to battery power converter 118.

Battery power converter 118 includes a DC-DC converter 150 (sometimes referred to as a "DC-DC boost converter") connected to battery ON/OFF control module 120, and a DC-DC controller 152 to control the DC-DC converter. Assuming/when battery ON/OFF control module 120 supplies the output battery power to DC-DC converter 150 (as described below), the DC-DC converter steps up (boosts) the output battery power to the DC link voltage of 390 V, and supplies the stepped-up output battery power into the DC link voltage that feeds DC-DC inverter 140 of weld process regulator 112.

When AC power converter 110 converts AC power to the DC link voltage, which weld process regulator 112 then coverts to weld power WP, HP power source 100 (and HP power converter 102) is said to be generating the weld power using/based on the AC power. Similarly, when DC-DC converter 150 converts battery power to converted battery power and provides the same into the DC link voltage, which weld process regulator 112 converts to weld power WP such that battery power converter 118 facilitates generation of the weld power WP, HP power source 100 (and HP power converter 102) is said to be generating the weld power using/based on the battery power.

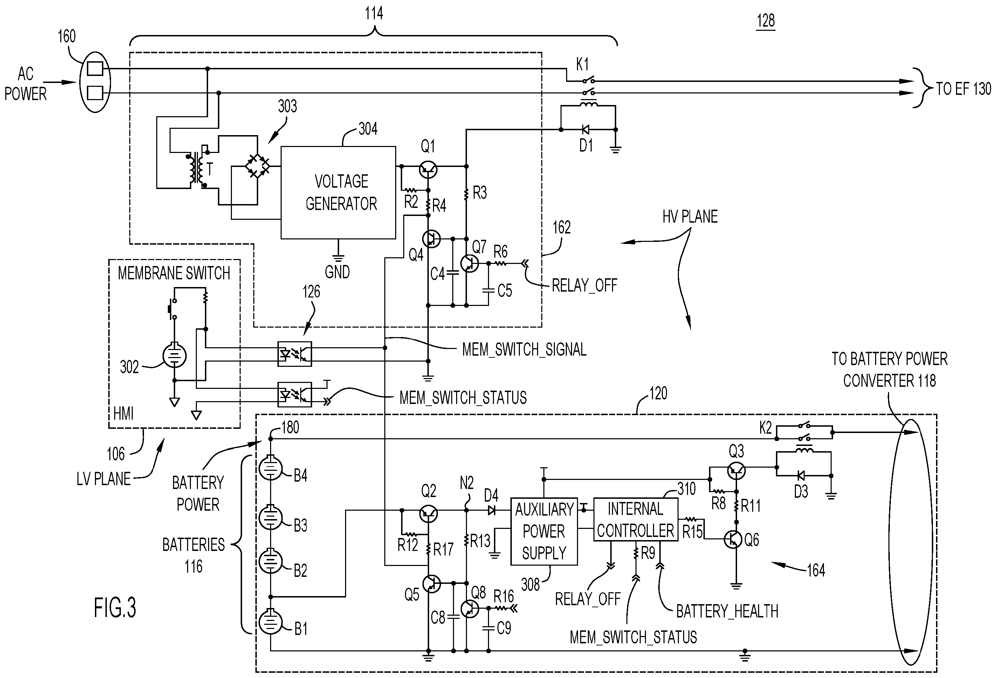

AC ON/OFF control module 114 is now described at a high level. HP power source 100 includes an AC input terminal 160 (also referred to as an "AC input") to receive AC power (also referred to as "AC input power") from an external AC power source, e.g., through a plug/connector. AC ON/OFF control module 114 includes an AC relay K1, such as a mechanical relay, and an AC relay controller 162 to control the AC relay K1, i.e., to open or close the AC relay K1. AC relay K1 has (i) an input connected to AC input terminal 160, and (ii) an output connected to an input of AC power converter 110. When AC relay K1 is open/closed, the AC relay K1 connects/disconnects AC input terminal 160 to/from the input of AC power converter 110, which turns the AC power converter ON (when the AC power is present)/OFF. AC relay controller 162 is connected to AC input terminal 160 through a transformer (shown in FIG. 3), and to user switch 106 indirectly through switch isolator 126. Switch isolator 126 electrically isolates user switch 106 from other circuits of HP power source 100. Generally, AC relay controller 162 opens (i.e., turns OFF)/closes (i.e., turns ON) AC relay K1 to connect/disconnect AC power converter 110 to/from AC input terminal 160 based on (i) whether AC power is present at the AC input terminal, and (ii) actuation of user switch 106.

Battery ON/OFF control module 120 is now described at a high level. Batteries 116 have a battery output terminal 180 (also referred to as a "battery input") to provide output battery power (i.e., "battery power"). Battery ON/OFF control module 120 includes a DC/battery relay K2, such as a mechanical relay, and a battery controller 164 to monitor batteries 116 and to control battery relay K2. Battery relay K2 includes (i) an input connected to battery output terminal 180, and (ii) an output connected to an input of DC-DC converter 150. When battery relay K2 is open/closed, the battery relay K2 connects/disconnects battery output terminal 180 to/from the input of DC-DC converter 150, in which case the battery output terminal serves as a battery power input terminal to the DC-DC converter. Battery controller 164 receives at least some battery power (when present) from batteries 116, is connected indirectly to user switch 106 through switch isolator 126, and monitors a health status (i.e., battery health) of batteries 116. Generally, battery controller 164 opens/closes battery relay K2 to connect/disconnect battery output terminal 180 to/from the input of DC-DC converter based on (i) whether battery power is present, (ii) the health of batteries 116, and (iii) actuation of user switch 106.

AC relay K1 and battery relay K2 connect/disconnect HP power converter 102 to AC power and output battery power, respectively, in the following manner. When the operator triggers/activates user switch 106, e.g., actuates the user switch, the user switch asserts a hard switch signal (HSS) 186A indicative of the actuation to switch isolator 126. In response, switch isolator 126 generates a soft switch signal (SSS) 186B indicative of hard switch signal 186A, and concurrently applies the soft switch signal to each of AC relay controller 162 and battery controller 164. In response to the soft switch signal, AC relay controller 162 momentarily closes (i.e., turns ON) AC relay K1 if/when AC power is present at AC input terminal 160. Concurrently, battery controller 164 intelligently controls battery relay K2 based on the battery health as determined by the battery controller. Assuming HP power source 100 (and HP power converter 102) is initially turned OFF, when user switch 106 is actuated to turn ON HP power source 100 (and HP power converter 102), AC relay controller 162 and battery controller 164 control respective relays K1 and K2 as follows:
a. Both relays K1 and K2 close (i.e., turn ON) when (i) both AC power and output battery power are present/available, and (ii) the battery health is determined be good, i.e., the battery health meets predetermined acceptable health criteria. This turns ON AC power converter 110 (i.e., the AC power subsystem), weld process regulator 112, and DC-DC converter 150 (i.e., the battery power subsystem).
b. Only relay K1 closes (i.e., turns ON) when only AC power is present. This turns ON AC power converter 110 and weld process regulator 112, but not DC-DC converter 150. Relay K2 remains open, which isolates user switch 106 and battery output terminal 180 from high voltages derived from the AC power.
c. Only relay K2 closes (i.e., turns ON) when only output battery power is present. This turns ON weld process regulator 112 and DC-DC converter 150 of battery power converter 118 (i.e., the battery power subsystem), but not AC power converter 110. Relay K1 remains open, which isolates user switch 106 and AC input terminal 160 from high voltages derived from the battery power.
d. Once the turn ON sequence is completed as described in one of (a), (b), and (c), battery controller 164 reads the status of the soft switch signal repeatedly. When the soft switch signal indicates that user switch 106 has been actuated (e.g., pressed) for a time that exceeds a predetermined/programmed time, both relays K1 and K2 open, which completely turns OFF HP power converter 102 (and thus HP power source 100).

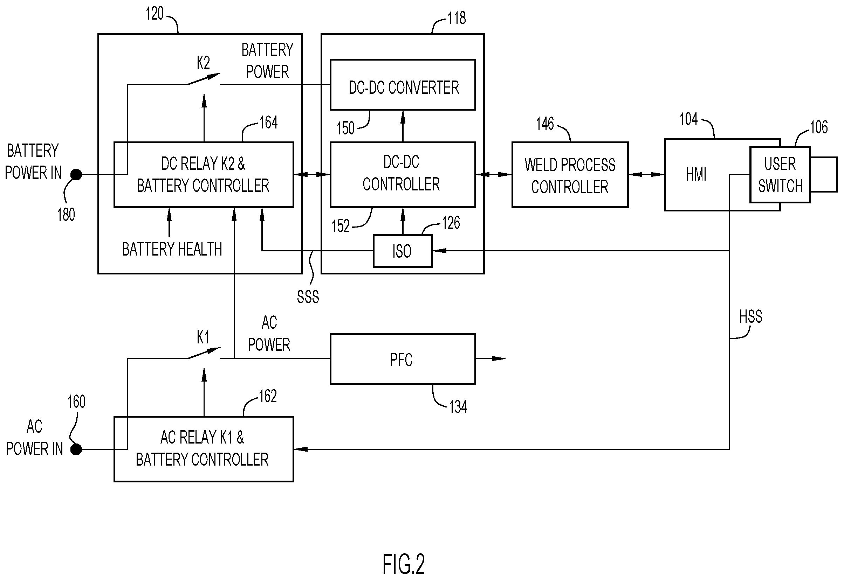

FIG. 2 is a simplified high-level block diagram of HP power source 100 that focuses on ON/OFF control circuitry 128 described above. In the example of FIG. 2, user switch 106 includes an electromechanical membrane switch mounted to a front panel of HMI 104 that is accessible to the operator. Depressing/actuating the membrane switch once generates the hard switch signal HSS, which switch isolator 126 converts to the soft switch signal SSS, which indicates the actuation. Switch isolator 126 provides soft switch signal SSS to battery ON/OFF control module 120 and AC ON/OFF control module 114, which respond to any actuation indicated by soft switch signal SSS.

FIG. 3 is a circuit diagram of batteries 116 and ON/OFF control circuitry 128. As shown in FIG. 3, user switch 106 includes a membrane switch. The membrane switch includes a small battery 302, e.g., a coin battery. Also, switch isolator 126 includes two parallel optocouplers to convert the hard switch signal produced upon actuation of the membrane switch to two parallel soft switch signals, including Mem_Switch_Signal and Mem_Switch_Status. AC relay controller 162 of AC ON/OFF control module 114 includes a transformer T followed by a ring-diode rectifier 303 and then a voltage generator circuit 304 to derive + 24 V relay power from AC power, when present.

AC relay controller 162 includes a PNP transistor Q1 and two NPN transistors Q4 and Q7, each of which operates as a switch. Q1 includes an emitter (e)-collector (c) current path (i.e., an e-c current path) connected to voltage generator circuit 304 and K1, with the emitter being connected to a base of Q1 through a resistor R2. Q4 has a collector connected to the base of Q1 through a resistor R4, an emitter connected to ground (GND), and a base connected to GND through a capacitor C4. Q7 has an emitter connected to GND, a collector connected to K1 through a resistor R3, and a base connected to GND through a capacitor C5. The base of Q7 receives a Relay_OFF signal through a resistor R6. K1 includes a diode D1 connected across terminals of K1.

Battery controller 164 of battery ON/OFF control module 120 includes PNP transistors Q2 and Q3, NPN transistors Q5, Q6, and Q8 (all switch transistors), an auxiliary power supply 308 coupled to a supply voltage +13 V, and an internal controller 310 coupled to the auxiliary power supply and to the supply voltage. Q2 has an emitter coupled to batteries 116, a base coupled to the emitter through a resistor R12, and a collector coupled to a node N2. Q5 has a collector coupled to the base of Q2 through a resistor R17 and also coupled to the collector of Q4 of AC ON/OFF control module 114, an emitter coupled to GND, and a base coupled to GND through a capacitor C8. Q8 includes a collector coupled to the base of Q5 and to node N2 through a resistor R13. Node N2 is coupled to auxiliary power supply 308.

Internal controller 310 generates the Relay_OFF signal and also generates a control signal and provides the control signal to Q6 through a resistor R15. Internal controller 310 receives through a resistor R9 the Mem_Switch_Status signal from switch isolator 126 that mirrors soft switch signal SSS, and receives a battery health (Battery Health) indicator from batteries 116. Q6 includes a base to receive the control signal from internal controller 310, an emitter connected to GND, and a collector connected to a resistor R11. Q3 includes an emitter directly connected to the supply voltage +13 V and that is also connected to a base of Q3 through a resistor R8. Q3 includes a collector connected to K2, which includes a diode connected across terminals of K2.

In the configuration described above in connection with FIG. 1, AC power converter 110, DC-DC inverter 140, and battery power converter 118 are considered to operate in a high voltage plane exposed to the DC link voltage. On the other hand, secondary circuit 144, AC relay controller 162, battery controller 164, and HMI 104 are considered to operate in a low voltage plane that is isolated from the high voltage plane, in order to protect the operator from high voltages. The aforementioned isolation is achieved using switch isolator 126, transformer 142 in weld process regulator 112 (shown in FIG. 1), and transformer T in AC relay controller 162.

Turn ON/OFF sequences performed by ON/OFF control circuitry 128 are now described in connection with FIG. 3. Starting from a condition when HP power source 100 and thus HP power converter 102 are turned OFF, ON/OFF control circuitry 128 performs a turn ON sequence to turn ON HP power source 100 and thus HP power converter 102 to generate WP power as follows, assuming that AC power and a battery output voltage are initially present at AC input terminal 160 and battery output terminal 180.
a. When the membrane switch is pressed, the coin battery forward biases the optocouplers of switch isolator 126, which produce the soft switch signal SSS.
b. The soft switch signal SSS pulls down (i.e., turns ON) Q1 and Q2. Consequently, Q1 passes the +24 V relay power to AC relay K1, to turn ON (i.e., close) the AC relay K1 momentarily, which supplies the AC power to AC power converter 110. Concurrently, series connected Q2 and diode D1 pass +20 V from the battery pack B1 (the lowest battery) to auxiliary power supply 308, which converts the +20 V DC to +3.3 V DC.
c. The +3.3 V DC powers ON internal controller 310 in battery controller 164. Internal controller 310 receives the battery health signal. Internal controller 310 sends an ON signal to Q6 when the battery health signal indicates that the battery health is good. Turning ON Q6 pulls down (i.e., turns ON) Q3, which passes +13 V DC to battery relay K2, to turn ON (i.e., close) battery relay K2 momentarily. This supplies the output battery voltage to DC-DC converter 150 of battery power converter 118.
d. Once Q1 and Q2 are ON, Q4 and Q5 turn ON respectively to latch conditions described above, to continue to apply power to the control circuits even when/after the operator releases the membrane switch.

In the event that only AC power is present (or battery power is present, but the battery health is deemed bad), the above-described circuits only close AC relay K1. In the event that only battery output power is available and the battery is healthy, the circuits only close battery relay K2.

After the turn ON sequence is complete, ON/OFF control circuitry 128 perform the following turn OFF sequence:
a. Internal controller 310 repeatedly reads or polls the Mem_Switch_Status signal produced by one of the optocouplers in the pair of optocouplers of switch isolator 126. The Mem_Switch_Status signal mirrors the soft switch signal SSS. In an example, internal controller 310 employ a 2 Hz poll rate with a 50% duty cycle.
b. When the polling indicates that the membrane switch (of user switch 106) has been pressed continuously (e.g., pressed and held in the pressed position) for a period of time that exceeds a predetermined/programmed time period, internal controller 310 asserts the Relay_OFF signal.
c. The Relay OFF signal turns off Q7 and Q8 to turn OFF (i.e., open) AC relay K1 and battery relay K2, respectively. This turns OFF HP power converter 102.

In an embodiment, HP power source 100 comprises:
a. Power inputs including an AC input (e.g., AC input terminal 160) for/to receive AC power and a battery input (e.g., battery output terminal 180) for/to receive battery power.
b. HP power converter 102 to convert one or more of the AC power and the battery power to weld power WP for welding or plasma cutting when the HP power converter is turned ON. HP power converter 102 includes AC power converter 110 and battery power converter 118 both followed by weld process regulator 112.
c. ON/OFF control circuitry 128 coupled to the power inputs and including user switch 106 (which may be a single user switch), switch isolator 126, AC ON/OFF control module 114, and battery ON/OFF control module 120 coupled to one another. The ON/OFF control circuitry 128 is configured to turn ON HP power converter 102 (and thus HP power source 100) upon actuation (e.g., a first actuation, which may be a single actuation) of the user switch 106 while the HP power converter is turned OFF. More specifically, to turn ON HP power converter 102, ON/OFF control circuitry 128 is configured to automatically (i.e., without further intervention by a user, mechanical or otherwise) connect to the HP power converter whichever of the AC power and the battery power is or are present at the power inputs upon the actuation. The ON/OFF control circuitry 128 is configured to automatically disconnect from the HP power converter 102 whichever one or more of the power inputs are receiving power in order to turn OFF the HP power converter upon a subsequent (e.g., a second) actuation of the user switch.

To turn ON HP power converter 102 upon the actuation of the user switch, the ON/OFF control circuitry 128 operates in accordance with the following logic to:
a. When both the AC power and the battery power are present, connect the AC input to the HP power converter 102 (e.g., specifically to the AC power converter 110) and connect the battery input to the HP power converter (e.g., specifically to the battery power converter 118).
b. When only the AC power is present, connect the AC input to the HP power converter 102 (specifically to the AC power converter 110) and disconnect the battery input from the HP power converter (specifically, from the battery power converter 118), in a manner that physically and electrically isolates the battery input from the user switch, the AC input, and the HP power converter.
c. When only the battery power is present (i) disconnect the AC input from the HP power converter 102 (specifically from the AC power converter 110) in a manner that physically and electrically isolates the AC input from the user switch, the battery input, and the HP power converter, and (ii) connect the battery input to the HP power converter (specifically to the battery power converter 118).

Thus, the ON/OFF control circuitry 128 is configured to connect the AC input to the AC power converter 110 and the battery input to the battery power converter 118 in correspondence with whichever of the AC power and the battery power is or are present upon the actuation.

In an embodiment, the ON/OFF control circuitry 128 is configured to receive a battery health indicator that indicates whether a battery (e.g., batteries 116) that generates the battery power is healthy and, when the battery power is present, only connect the battery input to the HP power converter 102 when the battery health indicator indicates that the battery is healthy.

Switch isolator 126 isolates user switch 106 from the AC input, the battery input, and the HP power converter 102 physically and electrically. User switch 106 interacts with other circuitry of ON/OFF control circuitry 128 through switch isolator 126. That is, switch isolator 126 communicates actuations of user switch 106 to the other circuitry of ON/OFF control circuitry 128 to enable the ON/OFF control circuitry to react to the actuations. For example, the user switch 106 generates an actuation signal (e.g., HSS) upon the actuation, and the switch isolator 126 converts the actuation signal to a control signal (e.g., SSS) that conveys the actuation to ON/OFF control circuitry 128.

The ON/OFF control circuitry 128 further includes:
a. A first relay (e.g., relay K1) to connect the AC input to the AC power converter 110 when the AC power is present, and to disconnect the AC input from the AC power converter when the AC power is not present.
b. A second relay (e.g., relay K2) to connect the battery input to the battery power converter 118 when the battery power is present, and to disconnect the battery input from the battery power converter when the battery power is not present.

In another embodiment, HP power source 100 may comprise:
a. An AC power terminal to receive AC power, a battery power terminal to provide battery power (e.g., to receive battery power from a battery), an AC power subsystem configured to operate off of AC power to produce (in combination with a weld process regulator following the AC power subsystem) weld power for welding or plasma cutting, and a battery power subsystem configured to operate off of battery power to produce weld power (in combination with a weld process regulator following the battery power subsystem).
b. ON/OFF control circuitry having a user switch and being coupled to the AC power subsystem and the battery power subsystem

The ON/OFF control circuitry may be configured to, upon actuation of the user switch:
a. Turn ON both the AC power subsystem and the battery power subsystem concurrently when AC power and battery power are present at the AC input terminal and the battery input terminal, concurrently. That is, respectively apply the AC power and the battery power to the AC power subsystem and the battery power subsystem to turn ON both of those subsystems.
b. Only turn ON the AC power subsystem when only AC power is present.
c. Only turn ON the AC power subsystem when only battery power is present.

In the examples presented herein, the user switch includes mechanical parts to be pressed/physically actuated by the operator. In other embodiments, the functions of the user switch may be implemented through a computer user interface that controls an electronic switch, such as a FET, with associated circuits. The user interface presents a menu of user options (e.g., turn ON, turn OFF), which are individually selectable through a user input interface, such as a keyboard, mouse, or the like. In that case, selection of an option may be configured to turn ON or turn OFF the FET to generate the soft switch signal, without actually pressing a user switch on the HMI.

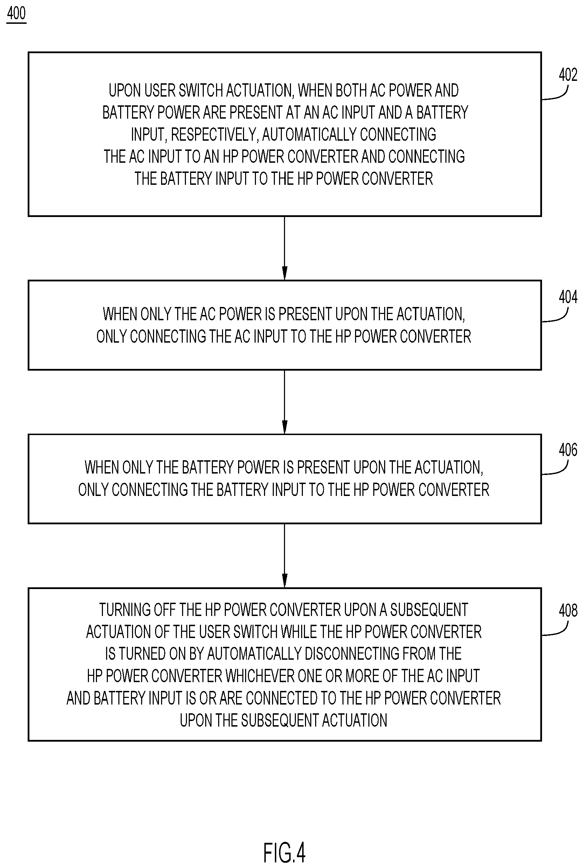

FIG. 4 is a flowchart of an example method 400 performed by HP power source 100. Generally, method 400 includes turning ON HP power converter 102 upon actuation of user switch 106 while the HP power converter is turned OFF by automatically connecting to the HP power converter whichever of the AC power and the battery power is or are present at their respective inputs upon the actuation. The connecting and disconnecting operations described below are performed automatically upon the actuation.

402 includes, when both the AC power and the battery power are present upon the actuation, automatically connecting the AC input to the HP power converter and connecting the battery input to the HP power converter.

404 includes, when only the AC power is present upon the actuation, only connecting the AC input to the HP power converter.

406 includes, when only the battery power is present upon the actuation, only connecting the battery input to the HP power converter.

408 includes turning OFF the HP power converter upon a subsequent actuation of the user switch while the HP power converter is turned ON by automatically disconnecting from the HP power converter whichever one or more of the AC input and battery input is or are connected to the HP power converter upon the subsequent actuation.

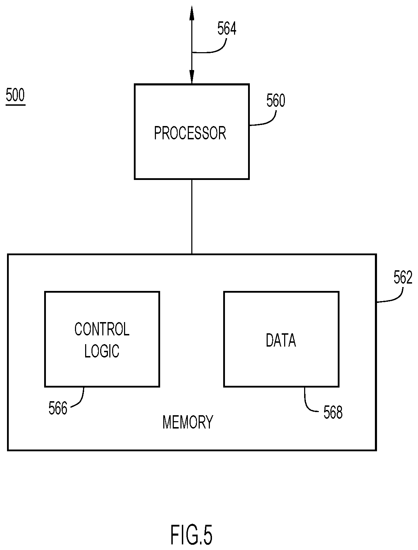

FIG. 5 is a block diagram of controller 500 according to an embodiment. Controller 500 may be implemented in one or more of the components described herein, including, but not limited to, HMI 104, AC power converter 110, weld process regulator 112, AC ON/OFF control module 114, battery power converter 118, and battery ON/OFF control module 120. Controller 500 includes processor(s) 560 and a memory 562 coupled to one another. The aforementioned components may be implemented in hardware, software, or a combination thereof. Processor(s) 560 communicate with external components/modules/circuits over interfaces 564. Memory 562 stores control software 566 (referred as "control logic"), that when executed by the processor(s) 560, causes the processor(s), and more generally, controller 500, to perform the various operations described herein. The processor(s) 560 may be a microprocessor or microcontroller (or multiple instances of such components). The memory 562 may include read only memory (ROM), random access memory (RAM), magnetic disk storage media devices, optical storage media devices, flash memory devices, electrical, optical, or other physically tangible (i.e., non-transitory) memory storage devices. Controller 500 may also be discrete logic embedded within an integrated circuit (IC) device.

In some aspects, the techniques described herein relate to a HP power source, wherein the ON/OFF control circuitry is configured to: receive a battery health indicator that indicates whether a battery that generates the battery power is healthy; and when the battery power is present, only connect the battery input to the HP power converter when the battery health indicator indicates that the battery is healthy.

In some aspects, the techniques described herein relate to a HP power source, wherein: the ON/OFF control circuitry is configured to, upon a subsequent actuation of the user switch while the HP power converter is turned ON, automatically disconnect, from the HP power converter, whichever of the AC input and the battery input is connected to the HP power converter upon the subsequent actuation, to turn OFF the HP power converter.

In some aspects, the techniques described herein relate to a HP power source, wherein: the HP power converter includes: an AC power converter to convert the AC power to the weld power; and a battery power converter to convert the battery power to the weld power; and the ON/OFF control circuitry is configured to connect the AC input to the AC power converter and the battery input to the battery power converter in correspondence with whichever of the AC power and the battery power are present upon the actuation.

In some aspects, the techniques described herein relate to a HP power source, wherein the ON/OFF control circuitry is further configured to, upon the actuation of the user switch: when both the AC power and the battery power are present, connect the AC input to the AC power converter and connect the battery input to the battery power converter; when only the AC power is present, connect the AC input to the AC power converter and disconnect the battery input from the battery power converter; and when only the battery power is present, disconnect the AC input from the AC power converter and connect the battery input to the battery power converter.

In some aspects, the techniques described herein relate to a HP power source, wherein the ON/OFF control circuitry further includes: a first electromechanical relay to connect the AC input to the AC power converter when the AC power is present, and to disconnect the AC input from the AC power converter when the AC power is not present; and a second electromechanical relay to connect the battery input to the battery power converter when the battery power is present, and to disconnect the battery input from the battery power converter when the battery power is not present.

Thus, in general, the memory 562 may comprise one or more tangible (non-transitory) computer readable storage media (e.g., memory device(s)) encoded with software or firmware that comprises computer executable instructions. For example, control software 566 includes logic to implement operations performed by the controller 500. Thus, control software 566 implements the various methods/operations described herein.

In addition, memory 562 stores data 568 used and produced by control software 566.

The above description is intended by way of example only. Although the techniques are illustrated and described herein as embodied in one or more specific examples, it is nevertheless not intended to be limited to the details shown, since various modifications and structural changes may be made within the scope of the present invention as defined in the appended claims.

## Claims

1. A hybrid-powered (HP) power source (HP power source) (100) for a welding or plasma cutting system, the HP power source having power inputs including an AC input (160) for AC power and a battery input (180) for battery power, and an HP power converter (102) to convert one or more of the AC power and the battery power to a weld power for welding or plasma cutting when the HP power converter is turned ON wherein the HP power source comprises:
ON/OFF control circuitry (114) including a user switch (106) and which is coupled to the power inputs (160,180) and the HP power converter (102), wherein the ON/OFF control circuitry is configured to turn ON the HP power converter upon actuation of the user switch while the HP power converter is turned OFF, wherein the ON/OFF control circuitry is configured to connect to the HP power converter whichever of the AC power and the battery power is or are present upon the actuation,
**characterized in that** the ON/OFF control circuitry is configured to:
when both the AC power and the battery power are present upon the actuation, automatically connect the AC input (160) to the HP power converter and connect the battery input (180) to the HP power converter;
when only the AC power is present upon the actuation, connect the AC input (160) to the HP power converter (102) and disconnect the battery input (180) from the HP power converter; and
when only the battery power is present upon the actuation, disconnect the AC input (160) from the HP power converter (102) and connect the battery input (180) to the HP power converter.

2. The HP power source of claim 1, wherein the ON/OFF control circuitry (114) is configured to disconnect the AC input (160) and the battery input (180) from the HP power converter (102) to turn OFF the HP power converter.

3. The HP power source of claim 1, wherein the ON/OFF control circuitry (114) is configured to disconnect the battery input (180) from the HP power converter (102) by physically and electrically isolating the battery input from the AC input (160) and the HP power converter.

4. The HP power source of claim 1, wherein the ON/OFF control circuitry (114) is configured to disconnect the AC input (160) from the HP power converter (102) by physically and electrically isolating the AC input from the battery input (180) and the HP power converter.

5. The HP power source of claim 1, wherein the ON/OFF control circuitry (114) is configured to:
receive a battery health indicator that indicates whether a battery (116) that generates the battery power is healthy; and
when the battery power is present, only connect the battery input to the HP power converter (102) when the battery health indicator indicates that the battery (116) is healthy.

6. The HP power source of claim 1, wherein:
the ON/OFF control circuitry (114) is configured to, upon a subsequent actuation of the user switch (106) while the HP power converter (102) is turned ON, automatically disconnect, from the HP power converter, whichever of the AC input (160) and the battery input (180) is connected to the HP power converter upon the subsequent actuation, to turn OFF the HP power converter.

7. The HP power source of claim 1, wherein:
the HP power converter (102) includes:
an AC power converter (110) to convert the AC power to the weld power; and
a battery power converter (118) to convert the battery power to the weld power; and
the ON/OFF control circuitry (114) is configured to connect the AC input (160) to the AC power converter (110) and the battery input (180) to the battery power converter (118) in correspondence with whichever of the AC power and the battery power are present upon the actuation.

8. The HP power source of claim 7, wherein the ON/OFF control circuitry (114) is further configured to, upon the actuation of the user switch (106):
when both the AC power and the battery power are present, connect the AC input (160) to the AC power converter (110) and connect the battery input (180) to the battery power converter (118);
when only the AC power is present, connect the AC input (160) to the AC power converter (110) and disconnect the battery input (180) from the battery power converter (118); and
when only the battery power is present, disconnect the AC input (160) from the AC power converter (110) and connect the battery input (180) to the battery power converter (118).

9. The HP power source of claim 8, wherein the ON/OFF control circuitry (114) further includes:
a first electromechanical relay (K1) to connect the AC input (160) to the AC power converter (110) when the AC power is present, and to disconnect the AC input from the AC power converter when the AC power is not present; and
a second electromechanical relay (K2) to connect the battery input (180) to the battery power converter (118) when the battery power is present, and to disconnect the battery input from the battery power converter when the battery power is not present.

10. The HP power source of claim 1, wherein:
the user switch (106) is a single user switch configured to be actuated manually and the actuation of the user switch is a single mechanical actuation of the user switch.

11. The HP power source of claim 1, wherein the ON/OFF control circuitry (114) further includes:
a switch isolator (126) coupled to the user switch (106) to isolate the user switch from the AC input (160), the battery input (180), and the HP power converter (102) physically and electrically, and through which the user switch interacts with the ON/OFF control circuitry (114).

12. The HP power source of claim 11, wherein:
the user switch (106) is configured to generate an actuation signal upon the actuation; and
the switch isolator (126) is configured to convert the actuation signal to a control signal that conveys the actuation to the ON/OFF control circuitry (114).

13. A method comprising:
providing an HP power source (100) including an AC input (160) to receive AC power and a battery input (180) to receive battery power, an HP power converter (102) to produce weld power when the HP power converter is turned ON, and a user switch (106);
turning ON the HP power converter (102) upon actuation of the user switch (106) while the HP power converter is turned OFF by automatically connecting to the HP power converter whichever of the AC power and the battery power is or are present upon the actuation; and
**characterized in that** the method further comprises the steps of:
when both the AC power and the battery power are present upon the actuation, automatically connecting the AC input (160) to the HP power converter (102) and connecting the battery input (180) to the HP power converter;
when only the AC power is present upon the actuation, connecting the AC input (160) to the HP power converter (102) and disconnecting the battery input (180) from the HP power converter; and
when only the battery power is present upon the actuation, disconnecting the AC input (160) from the HP power converter (102) and connecting the battery input (180) to the HP power converter.

## Patentansprüche

1. Eine hybridbetriebene (HP) Leistungsquelle (HP-Leistungsquelle) (100) für ein Schweiß- oder Plasmaschneidsystem, wobei die HP-Leistungsquelle Leistungseingänge aufweist, die einen Wechselstromeingang (160) für Wechselstromleistung und einen Batterieeingang (180) für Batterieleistung umfassen, und einen HP-Leistungswandler (102), um die Wechselstromleistung, die Batterieleistung oder beide in Schweißleistung zum Schweißen oder Plasmaschneiden umzuwandeln, wenn der HP-Leistungswandler auf EIN geschaltet ist, wobei die HP-Leistungsquelle Folgendes beinhaltet:
eine EIN/AUS-Steuerschaltung (114), die einen Benutzerschalter (106) umfasst und mit den Leistungseingängen (160, 180) und dem HP-Leistungswandler (102) gekoppelt ist, wobei die EIN/AUS-Steuerschaltung konfiguriert ist, den HP-Leistungswandler bei Betätigung des Benutzerschalters auf EIN zu schalten, während der HP-Leistungswandler auf AUS geschaltet ist, wobei die EIN/AUS-Steuerschaltung konfiguriert ist, diejenige der Wechselstromleistung und der Batterieleistung, die bei der Betätigung vorhanden ist, bzw. diejenigen, die dabei vorhanden sind, mit dem HP-Leistungswandler zu verbinden,
**dadurch gekennzeichnet, dass** die EIN/AUS-Steuerschaltung für Folgendes konfiguriert ist:
wenn sowohl die Wechselstromleistung als auch die Batterieleistung bei der Betätigung vorhanden sind, den Wechselstromeingang (160) automatisch mit dem HP-Leistungswandler zu verbinden und den Batterieeingang (180) mit dem HP-Leistungswandler zu verbinden;
wenn nur die Wechselstromleistung bei der Betätigung vorhanden ist, den Wechselstromeingang (160) mit dem HP-Leistungswandler (102) zu verbinden und den Batterieeingang (180) von dem HP-Leistungswandler zu trennen; und
wenn nur die Batterieleistung bei der Betätigung vorhanden ist, den Wechselstromeingang (160) von dem HP-Leistungswandler (102) zu trennen und den Batterieeingang (180) mit dem HP-Leistungswandler zu verbinden.

2. HP-Leistungsquelle gemäß Anspruch 1, wobei die EIN/AUS-Steuerschaltung (114) konfiguriert ist, den Wechselstromeingang (160) und den Batterieeingang (180) von dem HP-Leistungswandler (102) zu trennen, um den HP-Leistungswandler auf AUS zu schalten.

3. HP-Leistungsquelle gemäß Anspruch 1, wobei die EIN/AUS-Steuerschaltung (114) konfiguriert ist, um den Batterieeingang (180) von dem HP-Leistungswandler (102) durch physisches und elektrisches Isolieren des Batterieeingangs von dem Wechselstromeingang (160) und dem HP-Leistungswandler zu trennen.

4. HP-Leistungsquelle gemäß Anspruch 1, wobei die EIN/AUS-Steuerschaltung (114) konfiguriert ist, um den Wechselstromeingang (160) von dem HP-Leistungswandler (102) durch physisches und elektrisches Isolieren des Wechselstromeingangs von dem Batterieeingang (180) und dem HP-Leistungswandler zu trennen.

5. HP-Leistungsquelle gemäß Anspruch 1, wobei die EIN/AUS-Steuerschaltung (114) für Folgendes konfiguriert ist:
einen Batteriezustandsindikator zu empfangen, der angibt, ob eine Batterie (116), die die Batterieleistung erzeugt, funktionsfähig ist; und
wenn die Batterieleistung vorhanden ist, den Batterieeingang nur dann mit dem HP-Leistungswandler (102) zu verbinden, wenn der Batteriezustandsindikator angibt, dass die Batterie (116) funktionsfähig ist.

6. HP-Leistungsquelle gemäß Anspruch 1, wobei:
die EIN/AUS-Steuerschaltung (114) konfiguriert ist, bei einer nachfolgenden Betätigung des Benutzerschalters (106), während der HP-Leistungswandler (102) auf EIN geschaltet ist, automatisch denjenigen des Wechselstromeingangs (160) und des Batterieeingangs (180), der bei der nachfolgenden Betätigung mit dem HP-Leistungswandler verbunden ist, von dem HP-Leistungswandler zu trennen, um den HP-Leistungswandler auf AUS zu schalten.

7. HP-Leistungsquelle gemäß Anspruch 1, wobei:
der HP-Leistungswandler (102) Folgendes umfasst:
einen Wechselstromleistungswandler (110), um die Wechselstromleistung in die Schweißleistung umzuwandeln; und
einen Batterieleistungswandler (118), um die Batterieleistung in die Schweißleistung umzuwandeln; und
die EIN/AUS-Steuerschaltung (114) konfiguriert ist, den Wechselstromeingang (160) mit dem Wechselstromleistungswandler (110) und den Batterieeingang (180) mit dem Batterieleistungswandler (118) entsprechend derjenigen der Wechselstromleistung und der Batterieleistung, die bei der Betätigung vorhanden ist, bzw. denjenigen, die dabei vorhanden sind, zu verbinden.

8. HP-Leistungsquelle gemäß Anspruch 7, wobei die EIN/AUS-Steuerschaltung (114) ferner konfiguriert ist, um bei der Betätigung des Benutzerschalters (106):
wenn sowohl die Wechselstromleistung als auch die Batterieleistung vorhanden sind, den Wechselstromeingang (160) mit dem Wechselstromleistungswandler (110) zu verbinden und den Batterieeingang (180) mit dem Batterieleistungswandler (118) zu verbinden;
wenn nur die Wechselstromleistung vorhanden ist, den Wechselstromeingang (160) mit dem Wechselstromleistungswandler (110) zu verbinden und den Batterieeingang (180) von dem Batterieleistungswandler (118) zu trennen; und
wenn nur die Batterieleistung vorhanden ist, den Wechselstromeingang (160) von dem Wechselstromleistungswandler (110) zu trennen und den Batterieeingang (180) mit dem Batterieleistungswandler (118) zu verbinden.

9. HP-Leistungsquelle gemäß Anspruch 8, wobei die EIN/AUS-Steuerschaltung (114) ferner Folgendes umfasst:
ein erstes elektromechanisches Relais (K1), um den Wechselstromeingang (160) mit dem Wechselstromleistungswandler (110) zu verbinden, wenn die Wechselstromleistung vorhanden ist, und um den Wechselstromeingang von dem Wechselstromleistungswandler zu trennen, wenn die Wechselstromleistung nicht vorhanden ist; und
ein zweites elektromechanisches Relais (K2), um den Batterieeingang (180) mit dem Batterieleistungswandler (118) zu verbinden, wenn die Batterieleistung vorhanden ist, und um den Batterieeingang von dem Batterieleistungswandler zu trennen, wenn die Batterieleistung nicht vorhanden ist.

10. HP-Leistungsquelle gemäß Anspruch 1, wobei:
der Benutzerschalter (106) ein einzelner Benutzerschalter ist, der zur manuellen Betätigung konfiguriert ist, wobei die Betätigung des Benutzerschalters eine einzelne mechanische Betätigung des Benutzerschalters ist.

11. HP-Leistungsquelle gemäß Anspruch 1, wobei die EIN/AUS-Steuerschaltung (114) ferner Folgendes umfasst:
einen Schalterisolator (126), der mit dem Benutzerschalter (106) gekoppelt ist, um den Benutzerschalter physisch und elektrisch von dem Wechselstromeingang (160), dem Batterieeingang (180) und dem HP-Leistungswandler (102) zu isolieren, und über den der Benutzerschalter mit der EIN/AUS-Steuerschaltung (114) zusammenwirkt.

12. HP-Leistungsquelle gemäß Anspruch 11, wobei:
der Benutzerschalter (106) konfiguriert ist, um bei der Betätigung ein Betätigungssignal zu erzeugen; und
der Schalterisolator (126) konfiguriert ist, das Betätigungssignal in ein Steuersignal umzuwandeln, das die Betätigung an die EIN/AUS-Steuerschaltung (114) übermittelt.

13. Ein Verfahren, das Folgendes beinhaltet:
Bereitstellen einer HP-Leistungsquelle (100), die einen Wechselstromeingang (160) zum Empfangen von Wechselstromleistung und einen Batterieeingang (180) zum Empfangen von Batterieleistung, einen HP-Leistungswandler (102) zum Erzeugen von Schweißleistung, wenn der HP-Leistungswandler auf EIN geschaltet ist, und einen Benutzerschalter (106) umfasst;
Schalten des HP-Leistungswandlers (102) auf EIN bei Betätigung des Benutzerschalters (106), während der HP-Leistungswandler auf AUS geschaltet ist, indem diejenige der Wechselstromleistung und der Batterieleistung, die bei der Betätigung vorhanden ist, bzw. diejenigen, die dabei vorhanden sind, automatisch mit dem HP-Leistungswandler verbunden wird bzw. werden; und
**dadurch gekennzeichnet, dass** das Verfahren ferner die folgenden Schritte beinhaltet:
wenn sowohl die Wechselstromleistung als auch die Batterieleistung bei der Betätigung vorhanden sind, automatisches Verbinden des Wechselstromeingangs (160) mit dem HP-Leistungswandler (102) und Verbinden des Batterieeingangs (180) mit dem HP-Leistungswandler;
wenn nur die Wechselstromleistung bei der Betätigung vorhanden ist, Verbinden des Wechselstromeingangs (160) mit dem HP-Leistungswandler (102) und Trennen des Batterieeingangs (180) von dem HP-Leistungswandler; und
wenn nur die Batterieleistung bei der Betätigung vorhanden ist, Trennen des Wechselstromeingangs (160) von dem HP-Leistungswandler (102) und Verbinden des Batterieeingangs (180) mit dem HP-Leistungswandler.

## Revendications

1. Une source de puissance à alimentation hybride (HP) (source de puissance HP) (100) pour un système de soudage ou de coupage au plasma, la source de puissance HP ayant des entrées de puissance incluant une entrée CA (160) pour une puissance CA et une entrée de batterie (180) pour une puissance de batterie, et un convertisseur de puissance HP (102) pour convertir une ou plusieurs puissances parmi la puissance CA et la puissance de batterie en une puissance de soudure pour un soudage ou un coupage au plasma lorsque le convertisseur de puissance HP est mis sur ON où la source de puissance HP comprend :
une circuiterie de commande ON/OFF (114) incluant un commutateur utilisateur (106) et qui est couplée aux entrées de puissance (160, 180) et au convertisseur de puissance HP (102), où la circuiterie de commande ON/OFF est configurée pour mettre sur ON le convertisseur de puissance HP lors de l'actionnement du commutateur utilisateur pendant que le convertisseur de puissance HP est mis sur OFF, où la circuiterie de commande ON/OFF est configurée pour connecter au convertisseur de puissance HP celle(s) parmi la puissance CA et la puissance de batterie qui est ou sont présente(s) lors de l'actionnement,
**caractérisée en ce que** la circuiterie de commande ON/OFF est configurée pour :
lorsqu'à la fois la puissance CA et la puissance de batterie sont présentes lors de l'actionnement, connecter automatiquement l'entrée CA (160) au convertisseur de puissance HP et connecter l'entrée de batterie (180) au convertisseur de puissance HP ;
lorsque seule la puissance CA est présente lors de l'actionnement, connecter l'entrée CA (160) au convertisseur de puissance HP (102) et déconnecter l'entrée de batterie (180) du convertisseur de puissance HP ; et
lorsque seule la puissance de batterie est présente lors de l'actionnement, déconnecter l'entrée CA (160) du convertisseur de puissance HP (102) et connecter l'entrée de batterie (180) au convertisseur de puissance HP.

2. La source de puissance HP de la revendication 1, où la circuiterie de commande ON/OFF (114) est configurée pour déconnecter l'entrée CA (160) et l'entrée de batterie (180) du convertisseur de puissance HP (102) afin de mettre sur OFF le convertisseur de puissance HP.

3. La source de puissance HP de la revendication 1, où la circuiterie de commande ON/OFF (114) est configurée pour déconnecter l'entrée de batterie (180) du convertisseur de puissance HP (102) en isolant physiquement et électriquement l'entrée de batterie de l'entrée CA (160) et du convertisseur de puissance HP.

4. La source de puissance HP de la revendication 1, où la circuiterie de commande ON/OFF (114) est configurée pour déconnecter l'entrée CA (160) du convertisseur de puissance HP (102) en isolant physiquement et électriquement l'entrée CA de l'entrée de batterie (180) et du convertisseur de puissance HP.

5. La source de puissance HP de la revendication 1, où la circuiterie de commande ON/OFF (114) est configurée pour :
recevoir un indicateur d'état de santé de batterie qui indique si une batterie (116) qui génère la puissance de batterie est en bon état ; et
lorsque la puissance de batterie est présente, connecter seulement l'entrée de batterie au convertisseur de puissance HP (102) lorsque l'indicateur d'état de santé de batterie indique que la batterie (116) est en bon état.

6. La source de puissance HP de la revendication 1, où :
la circuiterie de commande ON/OFF (114) est configurée pour, lors d'un actionnement ultérieur du commutateur utilisateur (106) pendant que le convertisseur de puissance HP (102) est mis sur ON, déconnecter automatiquement, du convertisseur de puissance HP, celle parmi l'entrée CA (160) et l'entrée de batterie (180) qui est connectée au convertisseur de puissance HP lors de l'actionnement ultérieur, afin de mettre sur OFF le convertisseur de puissance HP.

7. La source de puissance HP de la revendication 1, où :
le convertisseur de puissance HP (102) inclut :
un convertisseur de puissance CA (110) pour convertir la puissance CA en la puissance de soudure ; et
un convertisseur de puissance de batterie (118) pour convertir la puissance de batterie en la puissance de soudure ; et
la circuiterie de commande ON/OFF (114) est configurée pour connecter l'entrée CA (160) au convertisseur de puissance CA (110) et l'entrée de batterie (180) au convertisseur de puissance de batterie (118) en correspondance avec celle(s) parmi la puissance CA et la puissance de batterie qui sont présentes lors de l'actionnement.

8. La source de puissance HP de la revendication 7, où la circuiterie de commande ON/OFF (114) est en outre configurée pour, lors de l'actionnement du commutateur utilisateur (106) :
lorsqu'à la fois la puissance CA et la puissance de batterie sont présentes, connecter l'entrée CA (160) au convertisseur de puissance CA (110) et connecter l'entrée de batterie (180) au convertisseur de puissance de batterie (118) ;
lorsque seule la puissance CA est présente, connecter l'entrée CA (160) au convertisseur de puissance CA (110) et déconnecter l'entrée de batterie (180) du convertisseur de puissance de batterie (118) ; et
lorsque seule la puissance de batterie est présente, déconnecter l'entrée CA (160) du convertisseur de puissance CA (110) et connecter l'entrée de batterie (180) au convertisseur de puissance de batterie (118).

9. La source de puissance HP de la revendication 8, où la circuiterie de commande ON/OFF (114) inclut en outre :
un premier relais électromécanique (K1) pour connecter l'entrée CA (160) au convertisseur de puissance CA (110) lorsque la puissance CA est présente, et pour déconnecter l'entrée CA du convertisseur de puissance CA lorsque la puissance CA n'est pas présente ; et
un deuxième relais électromécanique (K2) pour connecter l'entrée de batterie (180) au convertisseur de puissance de batterie (118) lorsque la puissance de batterie est présente, et pour déconnecter l'entrée de batterie du convertisseur de puissance de batterie lorsque la puissance de batterie n'est pas présente.

10. La source de puissance HP de la revendication 1, où :
le commutateur utilisateur (106) est un commutateur utilisateur unique configuré pour être actionné manuellement et l'actionnement du commutateur utilisateur est un actionnement mécanique unique du commutateur utilisateur.

11. La source de puissance HP de la revendication 1, où la circuiterie de commande ON/OFF (114) inclut en outre :
un isolateur de commutateur (126) couplé au commutateur utilisateur (106) pour isoler physiquement et électriquement le commutateur utilisateur de l'entrée CA (160), de l'entrée de batterie (180), et du convertisseur de puissance HP (102), et par le biais duquel le commutateur utilisateur interagit avec la circuiterie de commande ON/OFF (114).

12. La source de puissance HP de la revendication 11, où :
le commutateur utilisateur (106) est configuré pour générer un signal d'actionnement lors de l'actionnement ; et
l'isolateur de commutateur (126) est configuré pour convertir le signal d'actionnement en un signal de commande qui véhicule l'actionnement jusqu'à la circuiterie de commande ON/OFF (114).

13. Un procédé comprenant :
la fourniture d'une source de puissance HP (100) incluant une entrée CA (160) pour recevoir une puissance CA et une entrée de batterie (180) pour recevoir une puissance de batterie, un convertisseur de puissance HP (102) pour produire une puissance de soudure lorsque le convertisseur de puissance HP est mis sur ON, et un commutateur utilisateur (106) ;
la mise sur ON du convertisseur de puissance HP (102) lors de l'actionnement du commutateur utilisateur (106) pendant que le convertisseur de puissance HP est mis sur OFF en connectant automatiquement au convertisseur de puissance HP celle(s) parmi la puissance CA et la puissance de batterie qui est ou sont présente(s) lors de l'actionnement ; et
**caractérisé en ce que** le procédé comprend en outre les étapes :
lorsqu'à la fois la puissance CA et la puissance de batterie sont présentes lors de l'actionnement, de connexion automatique de l'entrée CA (160) au convertisseur de puissance HP (102) et de connexion de l'entrée de batterie (180) au convertisseur de puissance HP ;
lorsque seule la puissance CA est présente lors de l'actionnement, de connexion de l'entrée CA (160) au convertisseur de puissance HP (102) et de déconnexion de l'entrée de batterie (180) du convertisseur de puissance HP ; et
lorsque seule la puissance de batterie est présente lors de l'actionnement, de déconnexion de l'entrée CA (160) du convertisseur de puissance HP (102) et de connexion de l'entrée de batterie (180) au convertisseur de puissance HP.
